Europäisches Patentamt

(19) European Patent Office

Office européen des brevets

(11) Publication number : **0 347 527 B1**

## (12) EUROPEAN PATENT SPECIFICATION

(45) Date of publication of patent specification :
03.06.92 Bulletin 92/23

(51) Int. Cl.⁵ : **E03C 1/05, F16K 31/02**

(21) Application number : **89105063.5**

(22) Date of filing : **21.03.89**

(54) Automatically operated water tap.

(30) Priority : **28.03.88 US 173883**

(43) Date of publication of application :
**27.12.89 Bulletin 89/52**

(45) Publication of the grant of the patent :
**03.06.92 Bulletin 92/23**

(84) Designated Contracting States :
**CH DE FR IT LI NL SE**

(56) References cited :
**WO-A-85/01337**
**DE-A- 1 937 278**
**DE-A- 2 136 318**
**DE-A- 2 719 963**
**DE-A- 2 721 217**
**US-A- 4 402 095**

(73) Proprietor : **SLOAN VALVE COMPANY**
**10500 Seymour Avenue**
**Franklin Park Illinois 60131 (US)**

(72) Inventor : **Wilson, John R.**
**3S712 Route 59**
**Naperville, Illinois 60540 (US)**

(74) Representative : **Patentanwälte Grünecker,**
**Kinkeldey, Stockmair & Partner**
**Maximilianstrasse 58**
**W-8000 München 22 (DE)**

Jouve, 18, rue Saint-Denis, 75001 PARIS

EP 0 347 527 B1

## Description

The invention relates to a water tap for automative operation of the type as described in the preamble of claim 1.

A water tap of this type is disclosed in DE-A-2721217. In the known water tap an ultrasonic sensing device which is able to alternatively emit and detect supersonic waves is arranged between the water outlet and the base. Ultrasonic sensing means of the known type require the waves to be reflected in essentially the same direction as emitted for proper detection. The direction of emission and detection forms a angle with the axes of the water flow from the outlet. One of the difficulties with this type of tap is designing it so it will respond to the presence or absence of a user but will not respond to other objects or activity, such as reflection from the sink basin, the water flow, or other extraneous signals. The design problems are further complicated by the desire to make the control reasonably sensitive to a user's presence at an operative position essentially beneath the tap outlet.

DE-A-1 937 278 describes a water tap for automatic operation which has a base and a spout. Sensing means are arranged at the underside of the spout in front of the water discharge outlet, when seen from the normal position of the user. The sensing means includes a signal emitter and a signal detector which are arranged laterally distant to each other on both sides of the center line of the spout respectively. The signal emitter is adapted to emit a light beam which forms an angle to a plane extending through center line of the spout and the center line of the water discharge, such that the reflecting device, i.e. the hands of the user, has to be positioned exactly at a predetermined position in this plane for actuating the water discharge.

Taps having associated emitting and/or detecting means mounted to detect a user's presence are shown in United States Patent Nos. 3,151,340; 3,415,278; 3,491,381; 3,505,692; 3,551,919; 3,585,652; 3,638,680; 4,398,310; 4,402,095; 4,682,628; 4,604,764 and 4,709,728. None provide a concentrated zone of effective detection which is positioned optimally relative to the flow path from the tap discharge.

Therefore, a need exists for a water tap for automatic operation containing sensing means provided and positioned optimally in order to form a concentrated zone of effective detection.

A tap fulfilling this need is described in claim 1.

The tap of the present invention includes an elongated cantilevered spout body provided with a water discharge outlet. An emitter is provided for transmitting signals into the area underneath the tap. A detector is provided which receives signals reflected from a user in the area under the tap to activate a circuit which generates a signal for opening and closing a valve in the water supply line. The emitter and detector are mounted in the tap body intermediate the base and discharge outlet along the longitudinal center of the spout body. The centerline of the detector field of view is parallel to the centerline of the tap discharge outlet and, preferably, slightly behind the outlet stream relative to a user standing at the sink. The centerline of the emitter output is at a convergent angle relative to the centerline of the detector field of view to intersect and form a concentrated zone of effective detection which preferably has a shape wider than it is deep transverse relative to the longitudinal center of the tap spout body.

Preferably, the centerline of the emitter output is at an angle relative to a sink bottom such that signals reflected from the sink bottom bounce away from the detector field of view.

An embodiment of the invention is hereinafter described by reference to the figures, wherein:

FIGURE 1 is a sectional view through the tap of the present invention.

FIGURE 2 is an underside view of the tap.

FIGURE 3 is an enlarged sectional view of the electronic control apparatus.

FIGURE 4 is a plan view of the optical base.

FIGURE 5 is a side elevation view of a sink using the tap of the present invention and showing the stream of water and the emitter output and detector field of view.

FIGURE 6 is a front view of the tap.

FIGURE 7 is a series of schematic views of the interference pattern between the emitter output and detector field of view, as well as the water stream, taken along lines A-A through F-F in FIGURE 5.

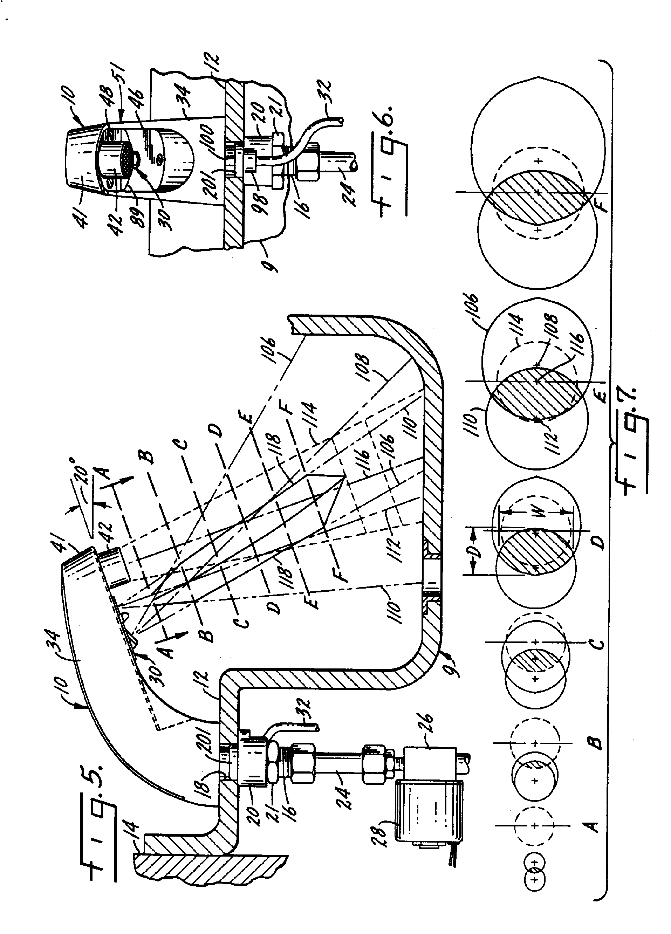

The overall construction of a tap according to the present invention is best illustrated in FIG. 5. Sink basin 9 is attached to a wall 14 and includes a tap generally designated 10 mounted on basin ledge 12. The tap is connected to a shank 16 which extends through a port 18 in the ledge for securement from beneath the ledge as will be explained. The shank 16 is connected to a water supply line 24. The water supply line includes a valve 26 operable by solenoid 28. The water supply line is connected to a mixing valve (not shown) which mixes hot and cold water, which is fed to the supply line 24. Thus the tap of the illustrated embodiment discharges water having a pre-set temperature. Of course, the automatic operation aspect of the present invention could be utilized with any tap including one having control of discharge temperatures.

Solenoid 28 is controlled by signals from an electronic control means indicated generally at 30. Electrical connections for the power supply and the control signals are provided through electrical cable 32. The cable is connected to the solenoid 28 and a power source (not shown).

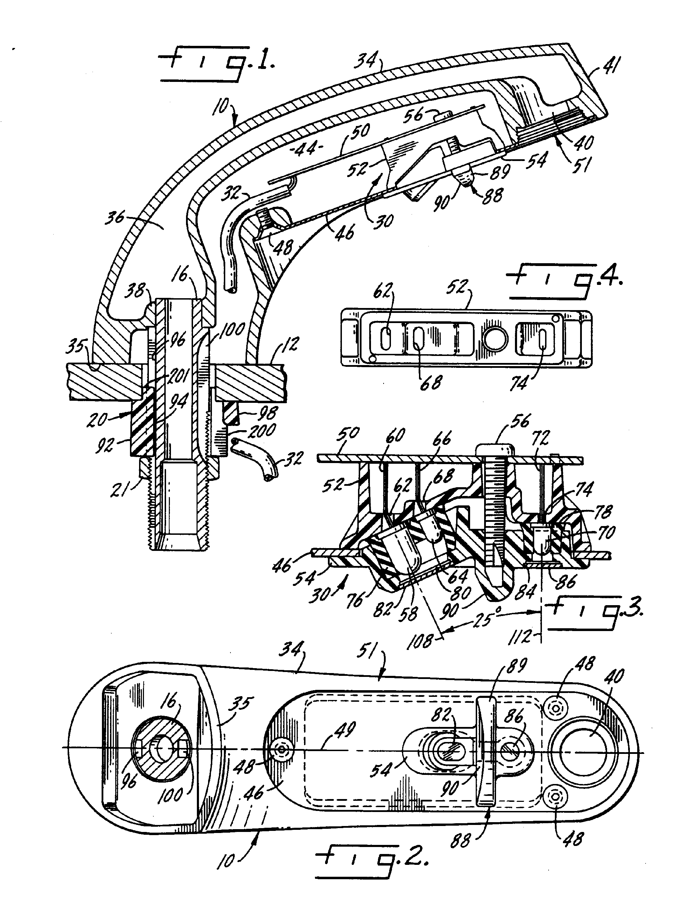

Details of the tap 10 and the electronic control means 30 are shown in FIGS. 1-4. The exposed portion of the tap includes spout 34, with a base 35 resting on ledge 12. As seen in FIGS. 1, 2 and 5, spout body 34 in longitudinally elongate and is cantilevered from base 35, which rests upon basin ledge 12. Connection 38 mounts the upper end of the shank 16 to the spout 34. The spout body is longitudinally elongate from the base 35 to free end 41. For illustrative purposes, an imaginary vertical plane 49 bisects the longitudinal extent of the tap body as shown in FIG. 2.

A water passage 36 extends from a connection 38 to a discharge outlet 40 adjacent free end 41. An aerator 42 (FIGS. 5 and 6) may be threaded into the discharge outlet.

The underside of the tap spout body (facing basin 9) includes downwardly facing planar surface 51, which includes discharge outlet 40. The discharge outlet 40 is formed on centerline 116, and is generally perpendicular to surface 51.

Spout body 34 defines a cavity 44 in which electronic control means are mounted. Access to the cavity is through a cover plate 46 which is held to surface 51 in the faucet body by screws 48. The electronic control means 30 includes a printed circuit board 50 which carries the circuit required for generating the control signals to the solenoid 28 in response to the sensing of reflected signals. The circuit may be any suitable circuit. Examples of circuits which may be used to control the operation of the tap include those disclosed in United States Patent Nos. 4,309,781; 4,402,095 and 4,682,628. The particular circuitry forms no part of the present invention.

The sensing arrangement of the illustrated embodiment utitized an infrared emitter and detector. Signals emitted from the signal emitter are reflected by a stimulus such as the hands of the user and are received by the signal detector. Appropriate circuitry is provided which operates the solenoid 28 in response to the reflected signals. It is contemplated that any emission and detection device could be substituted for the disclosed system.

The printed circuit board is connected to a base 52 and a cover 54 by a screw 56. The cover plate 46 is trapped between the base and cover, with the cover exposed through an opening in the cover plate.

The base 52 mounts an emitter 58. The emitter leads 60 extend through an opening 62 in the base to connect to the printed circuit board 50. In a preferred embodiment, the emitter is a gallium aluminum arsenide infrared emitting diode such as an OP295C available from Optaelectronics Divison of TRW, electronic Component Group, Carrollton, Texas.

An detector 70 having leads 72 extends through openings 74 for connection to the printed circuit board 50. The detector 70 is an NPN silicon phototransistor such as an OP501SLA available from the same source. The emitter and detector are disposed on the longitudinal center of spout body 34 with the detector positioned nearest the discharge outlet.

A visible LED 64 is mounted adjacent to the emitter 58. Leads 66 extend through openings 68 for connection to the printed circuit board 50. The visible LED 64 is used for circuit diagnosis. It is connected electrically to glow dimly to indicate power is being supplied to the board. The LED 64 is also arranged to glow brightly when the control means receives infrared light signals reflected from a user's hands.

An elastomeric emitter seal 76 encompasses the emitter 58 and LED 64 and is pressed into contact with the base 52 by the cover 54 to prevent water from shorting the leads 60 and 66. Similarly, an elastomeric detector seal 78 encompasses the detector 70 and is pressed into engagement with the optical base 52 by the cover 54. An emitter opening 80 in the cover permits passage of light through the emitter window 82 (FIG. 2). Likewise, a detector opening 84 permits entry of light through the detector window 86.

A drip guard 88 extends downwardly from the cover plate 46 and extends transversely of the spout body longitudinal center 49 between the emitter 58 and detector 70. As seen in FIGS. 2 and 6, the drip guard includes an arcuate surface 89 which causes any water to collect in droplets at the lowest portion of the surface and drop off the guard into the basin 9. The function of the guard 88 is to prevent a direct light path from the emitter 58 to the detector 70. Such a path could possibly be caused by water droplets or by stray light rays. The drip guard has an angled surface 90 so as to not interfere with the signals emanating from the emitter.

A spacer 20 and nut 21, illustrated in FIGS 1, 5 and 6, secure the tap to the basin body 12. Spacer 20 has a generally cylindrical body 92 having a central bore therethrough which allows the spacer to slip into the tap shank 16, as best seen in FIG. 1. A key 94 on the interior of the body engages a keyway 96 in the tap shank 16 to rotationally lock the spacer and shank together. One side of the spacer has a longitudinal slot 200 which is spanned by a cable guide loop 98. The slot 200 provides ready access to a slot 100 in the shank 16 for threading the cable 32 out of the tap body cavity 44. A locating ring 201 on the upper surface of the spacer 20 fits in the port 18 of the basin to centralize the shank 16 whith respect to the port.

Turning now to FIG. 5, the arrangement of the emitting and detecting is illustrated. The emitter 58 emits infrared light in a narrow output cone of emission emanating from planar surface 51. The cone of emission has an axis 108 and the general boudaries at the two-thirds power point are at about a 30° included angle as illustrated at 106. The detector 70 senses an area beneath the planar surface 51 for infrared light impinging on it from within a narrow conical field of view having an axis 112 and an included angle of abourt 30° at the two-thirds power point, defined by the general boundaries 110. The general envelope of the water stream is shown at 114.

FIG. 7 shows the cross section of the intersections of the output cone of emission and field of view 110 at various distances from the emitter and detector. Cross sections A-A through F-F are located at one inch (25,4 mm) intervals.

The concentrated primary zone of detection is at the intersection between the cone of emitter output 58 and cone of field of view 110 of detectro 70. In a sense, this can be thought of as an electronic handle or lever for actuating the tap. Its boundaries are illustrated at 118 in FIG. 5. The zone is optimally disposed generally behind the water stream, yet near enough such that a user is properly positioned underneath the outlet upon commencement of flow.

It will be noted that there is a non-detection zone adjacent the tap body 10. This feature helps in maintaining a cleaner tap by keeping the user's hands away from the tap. It also assists in reducing false triggering of the circuit. There is also a non-detection zone adjacent to the basin. This is required to avoid detection of the basin, regardless of shape, size and/or color. As seen in FIG. 7, the detection zone extends between section A-A, which commences about one inch (25,4 mm) from planar surface 51 and F-F, which is about six inches (152,4 mm) from planar surface 51. The best detection occurs in that area as a result of a combination of the shortest distance from the emitter and detector, the large overlapping areas of emitter output and detector field of view, and the high intensity of the infrared lighr and sensitivity of the detection at these elevations.

It will be noted that the control means 30 which supports the emitter and detector is mounted in the centilevered spout body 34. The downwardly facing planar surface 51 of the spout body extends at an angle of 20° to the horizontal. Because the output of the emitter does not impinge perpendicularly on the basin bottom, this effectively increases the distance between the emitter and detector and the bottom basin, which in turn reduces possible inadvertent detection of the basin. It will also be noted that the angle of the centerling 108 of the output cone of the emitter 58 is tilted 25° toward the centerline 112 of the cone of the field of view 110 of detector 70. The cones therefore converge to provide the intersections described and shown in FIGS 5 and 7.

FIG. 7 illustrates that the intersections of the cones 106 and 110 defines an asymmetric shape. Looking at section D-D, the electronic lever has a width W and a depth D, with the width transverse to the center of the longitudinal extent of the tap being greater than the depth. Thus, the zone of effective detection is wider than it is deep in reference to the position of the user standing in front of the outer or free end of the tap. This allows easier detection by giving the user a wider target area. Also, the reduced depth is required to avoid detection of the water stream. The asymmetric cross section of the electronic lever results from placing the emitter and detector on the longitudinal center 49 of the tap body and positioning the center lines of their respective operative cones of activity at a convergent angle relative to each other. The electronic lever is as close to the water stream as possible without triggering false readings from light being reflected off the water. Yet, a user can place his hands where he expects the water stream to be and activate the tap.

The reason the electronic lever 118 attenuates after section F in FIG. 5 is the intensity of the infrared light has dissipated at that point to an extent that will not permit detection at the detector. As a result, the basin will not activate the control circuit.

## Claims

1. A water tap (10) for automatic operation defining a base (35) and an elongated spout body (34) extending therefrom including a discharge outlet (40) spaced from the base, and sensing means (58,70) operative to detect the presence of a user, said sensing means (58,70) being disposed intermediate said base (35) and said outlet (40),
**characterized in that** said sensing means comprises a signal emitter (58) and a signal detector (70) each being disposed on the longitudinal centerline (49) of the spout body (34), said emitter (58) having an output range about an axis (108), said detector (70) having a field of view symmetrical about an axis (112), said axis (112) of said detector (70) being parallel to a centerline (116) of said discharge outlet (40), the axis (108) of the output of the emitter (58) is at a convergent angle relative to the axis (112) of the field of view of the detector (70) for an intersection of the output of the emitter (58) and the field of view of the detector (70), the intersection forming a zone (118) of effective detection.

2. A tap as claimed in claim 1 wherein said detector (70) is disposed nearest the discharge outlet (40) of said spout body (34).

3. A tap as claimed in claim 1 or 2 wherein the spout body (34) defines a generally planar surface (51), said emitter (58) and detector (70) and said discharge outlet (40) each face outwardly therefrom.

4. A tap as claimed in claim 3 wherein said planar surface (51) is disposed at about an angle of 20° relative to horizontal.

5. A tap as claimed in any one of claims 1 to 4 wherein the angle between the axes (108,112) of said output of said emitter (58) and field of view of said detector (70) is at about 25°.

6. A tap as claimed in any one of claims 1 to 5 wherein a drip guard (88) extends from said spout body (34) and is generally arcuate in a direction transverse to the longitudinal center (49) of the spout body (34).

7. A tap as claimed in any one of claims 1 to 6 wherein the output of emitter (58) and the field of view each form a cone.

8. A tap as claimed in any one of claims 1 to 7 wherein the discharge outlet (40) is adjacent a free end (41) of the body spout (34) and the zone (118) of effective detection is disposed behind the discharge outlet (40) relative to said free end (41).

9. A tap as claimed in any one of claims 1 to 8 wherein the zone (118) of effective detection is wider in a direction transverse to the longitudinal center of the body spout (34).

10. A tap as claimed in any one of claims 1 to 9 wherein the zone (118) of effective detection commences about an inch (25.4 mm) from the spout body planar surface (51), providing a non-detecting zone adjacent the tap body (10).

11. A tap as claimed in any one of claims 1 to 10 wherein the zone (118) of effective detection is elongate in the direction of discharge from the discharge outlet (40), and extends about six inches (152.4 mm) from the spout body planar surface (51).

12. A tap as claimed in any one of claims 7 to 11 wherein the cone of output of said emitter (58) has an included angle of about 30° at the 2/3 power point.

13. A tap as claimed in any one of claims 7 to 12 wherein the cone of said field of view has an included angle of about 30° at the 2/3 power point.

14. A tap as claimed in any one of claims 1 to 13 wherein the emitter (58) is a light emitter diode and the detector (70) is a phototransistor.

**Patentansprüche**

1. Automatisch gesteuerter Wasserhahn (10) mit einem Basisteil (35) und einen sich davon wegerstreckenden, langgestreckten Ausfließarm (34), der eine vom Basisteil beabstandete Ausflußöffnung (40) aufweist, und mit einer Fühleinrichtung (58, 70), die zum Feststellen der Anwesenheit eines Benutzers tätig wird, wobei die Fühleinrichtung (58, 70) zwischen dem Basisteil (35) und der Ausflußöffnung (40) angeordnet ist, **dadurch gekennzeichnet**, daß die Fühleinrichtung einen Signalsender (58) und einen Signalempfänger (70) aufweist, die beide in der Längsmittellinie (49) des Ausfließarms (34) angeordnet sind, wobei der Sender (58) einen sich um eine Achse (108) erstreckenden Sendebereich aufweist, wobei der Empfänger (70) ein sich symmetrisch um eine Achse (112) erstreckendes Empfangsfeld aufweist, wobei die Achse (112) des Empfängers (70) parallel zu einer Mittellinie (116) der Ausflußöffnung (40) verläuft, wobei die Achse (108) des Sendebereichs des Senders (58) relativ zur Achse (112) des Empfangsfeldes des Empfängers (70) unter einem konvergierenden Winkel verläuft, um eine Überschneidung des Sendebereichs des Senders (58) und des Empfangsfeldes des Empfängers (70) zu bilden, wobei die Überschneidung eine Effektiv-Feststellungszone (118) bildet.

2. Wasserhahn nach Anspruch 1, wobei der Empfänger (70) nahe der Ausflußöffnung (40) des Ausfließarms (34) angeordnet ist.

3. Wasserhahn nach Anspruch 1 oder 2, wobei der Ausfließarm (34) eine im wesentlichen plane Oberfläche (51) definiert, wobei jeweils der Sender (58), der Empfänger (70) und die Ausflußöffnung (40) von dieser nach außen weisen.

4. Wasserhahn nach Anspruch 3, wobei die plane Oberfläche (51) unter einem Winkel von etwa 20° relativ zur Horizontalen angeordnet ist.

5. Wasserhahn nach einem der Ansprüche 1 bis 4, wobei der Winkel zwischen den Achsen (108, 112) des Sendebereichs des Senders (58) und des Empfangsfeldes des Empfängers (70) bei etwa 25° liegt.

6. Wasserhahn nach einem der Ansprüche 1 bis 5, wobei sich ein Tropfenwächter (88) vom Ausfließarm (34) wegerstreckt und im wesentlichen in einer Richtung quer zur Längsmitte (49) des Ausfließarms (34) gebogen ist.

7. Wasserhahn nach einem der Ansprüche 1 bis 6, wobei der Sendebereich des Senders (58) und das Empfangsfeld jeweils einen Kegel bilden.

8. Wasserhahn nach einem der Ansprüche 1 bis 7, wobei die Ausflußöffnung (40) in der Nähe eines freien Endes (41) des Ausfließarms (34) angeordnet ist und die Effektiv-Feststellungszone (118) relativ zum freien Ende (41) gesehen hinter der Ausflußöffnung (40) angeordnet ist.

9. Wasserhahn nach einem der Ansprüche 1 bis 8, wobei die Effektiv-Feststellungszone (118) in einer Richtung quer zur Längsmitte des Ausfließarms (34) breiter ist.

10. Wasserhahn nach einem der Ansprüche 1 bis 9, wobei die Effektiv-Feststellungszone (118) etwa ein Inch (25,4mm) von der planen Oberfläche (51) des Ausfließarms beginnt, wobei eine Zone einer Nicht-Feststellung benachbart dem Wasserhahnkörper (10) gebildet ist.

11. Wasserhahn nach einem der Ansrpüche 1 bis 10, wobei die Effektiv-Feststellungszone (118) in der Ausfließrichtung aus der Ausflußöffnung (40) langgestreckt ist und sich etwa 6 Inch (152,4mm) von der planen Oberfläche (51) des Ausfließarms wegerstreckt.

12. Wasserhahn nach einem der Ansprüche 7 bis 11, wobei der Sendekegel des Senders (58) einen Einschlußwinkel von etwa 30° beim 2/3-Kraftpunkt aufweist.

13. Wasserhahn nach einem der Ansprüche 7 bis 12, wobei der Empfangsfeldkegel einen Einschlußwinkel von etwa 30° beim 2/3-Kraftpunkt aufweist.

14. Wasserhahn nach einem der Ansprüche 1 bis 13, wobei der Sender (58) eine Lichtemissionsdiode und der Empfänger (70) ein Fototransistor ist.

## Revendications

1. Robinet d'eau à fonctionnement automatique (10), comprenant une base (35) et un corps de bec oblong (34) qui s'étend à partir de la base et qui comprend un orifice d'écoulement (40) espacé de la base, et des moyens de détection (58, 70) servant à détecter la présence d'un utilisateur, lesdits moyens de détection (58, 70) étant disposés entre ladite base (35) et ledit orifice (40),
caractérisé en ce que lesdits moyens de détection comprennent un émetteur de signaux (58) et un détecteur de signaux (70), chacun d'eux étant disposé sur l'axe longitudinal (49) du corps de bec (34), ledit émetteur (58) ayant une plage de sottie autour d'un axe (108), ledit détecteur (70) ayant un champ optique symétrique autour d'un axe (112), ledit axe (112) dudit détecteur (70) étant parallèle à un axe (116) dudit orifice d'écoulement (40), l'axe (108) de la sortie de l'émetteur (58) étant disposé selon un angle convergent par rapport à l'axe (112) du champ optique du détecteur (70) pour une intersection de la sortie de l'émetteur (58) et du champ optique du détecteur (70), l'intersection formant une zone (118) de détection efficace.

2. Robinet selon la revendication 1, dans lequel ledit détecteur (70) est disposé le plus près de l'orifice d'écoulement (40) dudit corps de bec (34).

3. Robinet selon la revendication 1 ou la revendication 2, dans lequel le corps de bec (34) comprend une surface globalement plane (51), lesdits émetteur (58) et détecteur (70) et ledit orifice d'écoulement (40) étant chacun orienté vers l'extérieur à partir de cette surface.

4. Robinet selon la revendication 3, dans lequel ladite surface plane (51) est disposée selon un angle d'environ 20° par rapport à l'horizontale.

5. Robinet selon l'une quelconque des revendications 1 à 4, dans lequel l'angle entre les axes (108, 112) de ladite sortie dudit émetteur (58) et du champ optique dudit détecteur (70) est d'environ 25°.

6. Robinet selon l'une quelconque des revendications 1 à 5, dans lequel un dispositif d'arrêt des gouttes (88) s'étend depuis ledit corps de bec (34) et a une forme globalement arquée dans un sens transversal à l'axe longitudinal (49) du corps de bec (34).

7. Robinet selon l'une quelconque des revendications 1 à 6, dans lequel la sortie de l'émetteur (58) et le champ optique forment chacun un cône

8. Robinet selon l'une quelconque des revendications 1 à 7, dans lequel l'orifice d'écoulement (40) est adjacent à une extrémité libre (41) du corps de bec (34) et la zone (118) de détection efficace est située derrière l'orifice d'écoulement (40) par rapport à ladite extrémité libre (41).

9. Robinet selon l'une quelconque des revendications 1 à 8, dans lequel la zone (118) de détection efficace est plus large dans un sens transversal à l'axe longitudinal du corps de bec (34).

10. Robinet selon l'une quelconque des revendications 1 à 9, dans lequel la zone (118) de détection efficace commence à environ un pouce (25,4 mm) de la surface plane (51) du corps de bec, ce qui constitue une zone de non-détection adjacente au corps de robinet (10).

11. Robinet selon l'une quelconque des revendications 1 à 10, dans lequel la zone (118) de détection efficace est allongée dans le sens de l'écoulement à partir de l'orifice d'écoulement (40) et s'étend jusqu'à environ 6 pouces (152,4 mm) de la surface plane (51) du corps de bec.

12. Robinet selon l'une quelconque des revendications 7 à 11, dans lequel le cône de sortie dudit émetteur (58) a un angle inclus d'environ 30° au point des 2/3 de la puissance.

13. Robinet selon l'une quelconque des revendications 7 à 12, dans lequel le cône dudit champ optique a un angle inclus d'environ 30° au point des 2/3 de la puissance,

14. Robinet selon l'une quelconque des revendications 1 à 13, dans lequel l'émettert (58) est une diode électroluminescente et le détecteur (70) un phototransistor.

fig.1.

fig.4.

fig.3.

fig.2.

fig.5.

fig.6.

fig.7.

EP 0 347 527 B1